# EUROPÄISCHE PATENTANMELDUNG

(11) **EP 1 989 975 A1**
(43) Veröffentlichungstag der Anmeldung: **12.11.2008**
(21) Anmeldenummer: 08008228.2
(22) Anmeldetag: 30.04.2008
(51) Int. Cl.: A47F 5/00, A47F 5/10, A47F 5/14, F16B 7/04

(54) **Verkaufsständer**

(30) Priorität: 11.05.2007 DE 102007022679
(71) Anmelder: Wanzl Metallwarenfabrik GmbH, 89336 Leipheim (DE)
(72) Erfinder: Handerer, Manfred, 89368 Winterbach (DE)

(57) **Zusammenfassung**

Die Erfindung betrifft einen Ständer (1), insbesondere Verkaufsständer (2), mit Stützen (3) und mindestens einem wechselbaren Zwischenteil (4) an dem vorzugsweise eine Informationseinrichtung (5) angeordnet ist.

Die Erfindung zeichnet sich dadurch aus, dass wenigstens eines der Zwischenteile (4) mit einem federnden Bauteil (6) ausgestattet ist.

## Beschreibung

Die Erfindung betrifft einen Ständer, insbesondere einen Verkaufsständer, mit den Merkmalen im Oberbegriff des Hauptanspruchs.

Ein Ständer dieser Gattung ist aus dem Stand der Technik bekannt. Er ist von Hand beweglich und weist vier Stützen auf, an denen Etagen angeordnet sind. Am Ständer ist eine Informationseinrichtung vorgesehen, die mittels eines Zwischenteils an den Stützen angeordnet ist. Hiefür werden Schrauben oder andere Verbindungsmittel verwendet.

Die Aufgabe der Erfindung besteht darin, einen Ständer aufzuzeigen, bei dem in verbesserter Weise ein Zwischenteil an einer Stütze angeordnet ist.

Die Erfindung löst die Aufgabe mit den Merkmalen im Hauptanspruch.

Die Ständer können mit dem wechselbar angeordneten Zwischenteil verbunden werden. Weiterhin besteht die Möglichkeit, eine Informationseinrichtung am Zwischenteil wechselbar anzuordnen.

Um ausreichende Stabilität zwischen Stützen und Zwischenteil zu bekommen und dennoch eine wechselbare Anordnung zu gewährleisten, findet wenigstens ein federndes Bauteil, das jeweils am Zwischenteil angeordnet ist, Verwendung.

Zum Montieren und/oder Demontieren des Zwischenteils an den Stützen sind keine Werkzeuge notwendig. Auch auf weitere Verbindungsmittel wie Schrauben oder sonstige Verbinder kann verzichtet werden.

Weiterhin können Toleranzen und/oder Verformungen an den Stützen mittels des federnden Bauteils ausgeglichen werden.

Die Erfindung wird anhand von Ausführungsbeispielen näher erläutert. Es zeigt
- Fig. 1: ausschnittsweise eine Stütze als Teil eines Ständers, sowie ein Zwischenteil mit einem federnden Bauteil in 3-D-Darstellung und
- Fig. 2: die gleiche Stütze in 3-D-Darstellung, wobei das Zwischenteil mit dem federnden Bauteil in der Stütze angeordnet ist.
- Fig. 3: einen Ständer in 3-D-Darstellung.

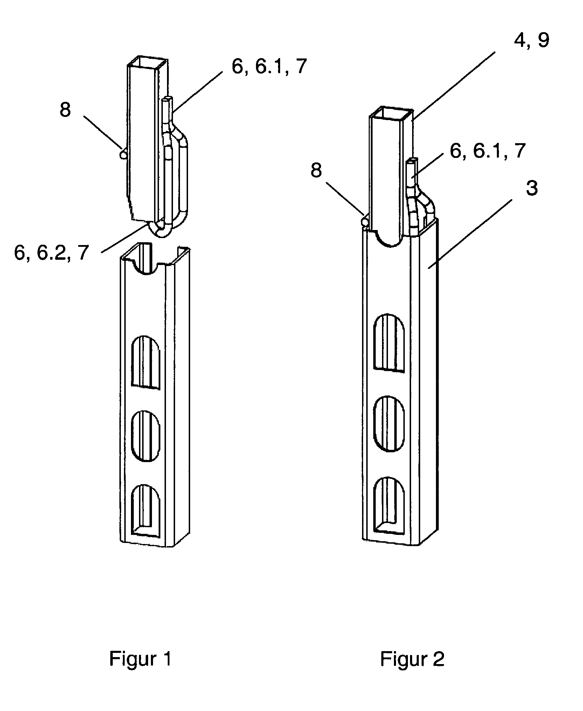

Fig. 1 zeigt ausschnittsweise einen Ständer 1, der auch in Form eines Verkaufsständers 2 zum Anbieten von diverser Ware, wie beispielsweise Blumen oder dergleichen, ausgeführt sein kann.

Jeder Ständer 1 weist eine Vielzahl von Stützen 3 auf. Vorzugsweise sind vier Stützen 3 vorgesehen. Meist weist jeder Ständer 1 eine rechteckige Querschnittsfläche mit einer schmalen und einer breiten Seite auf. Die Stützen 3 sind gegenüberliegend an jeder Ecke des Ständers 1 angeordnet. Vorzugsweise sind jeweils die gegenüberangeordneten Stützen 3 der schmalen Seite des Ständers 1 mit einem Zwischenteil 4 verbunden.

Die Stützen 3 weisen eine quadratische oder rechteckige Querschnittsfläche auf. Aber auch ein ovaler Querschnitt wäre denkbar. Jede Stütze 3 ist in ihrem Inneren hohl. Meist ist jede Stütze 3 an einer ihrer Kanten geöffnet. Dies ist auch in den Figuren 1 und 2 dargestellt.

Das Zwischenteil 4 wird in zwei der vorzugsweise vier Stützen 3 gesteckt. Am Zwischenteil 4 kann mindestens eine wechselbare Informationseinrichtung 5 angeordnet sein. Da es verschiedene Arten von Stützen 3 gibt, nicht immer ein Werkzeug vorhanden ist und dennoch das Zwischenteil 4 sicher im Innern der Stütze 3 angeordnet werden soll, weist jedes Zwischenteil 4 wenigstens ein federndes Bauteil 6 auf. Dadurch ist jedes Zwischenteil 4 mit seinem wenigstens einen federnden Bauteil 6 wechselbar im Inneren der Stütze 3 angeordnet.

Vorzugsweise ist das federnde Bauteil 6 zweiteilig ausgeführt. Das federnde Bauteil 6 weist ein erstes Ende 6.1 und ein zweites Ende 6.2 auf. Das federnde Bauteil 6 ist mit seinem ersten Ende 6.1 ortsfest an dem Zwischenteil 4 angeordnet. Das zweite Ende 6.2 des federnden Bauteils 6 ist im Inneren des Zwischenteils 4 angeordnet. Hierfür ist das Zwischenteil 4 in seinem Inneren hohl ausgebildet.

Das federnde Bauteil 6 ist vorzugsweise aus zwei nebeneinander angeordneten Drähten 7 gebildet. Am ersten Ende 6.1 liegen beide Drähte 7 nebeneinander. Vorzugsweise sind sie ortsfest und mittig an einer der Außenseite des Zwischenteils 4 angeordnet. Um eine federnde Wirkung zu erzielen, ist dann ein Abstand zwischen beiden Drähten 7 ausgeführt. Außerdem weist jeder Draht 7 eine Kröpfung auf. Der Abstand zwischen den Drähten 7 bleibt dem Fachmann überlassen, ist aber derart ausgeführt, dass ein Eintauchen in das Innere der Stütze 3 gegeben ist. Vorzugsweise liegen dann die Drähte 7, wie in Fig. 2 ersichtlich, jeweils an den Ecken der Stützen 3 an.

Damit es zu keiner Verletzungsgefahr kommt, sind die Drähte 7 um das untere Ende 9 des Zwischenteils 4 gebogen, so dass sich das zweite Ende 6.2 des federnden Bauteils 6 im Inneren des Zwischenteils 4 befindet.

Um eine federnde Wirkung zu erzielen ist - abgesehen vom ersten Ende 6.1 - ein Abstand zwischen der Außenseite des Zwischenteils 4 und dem Draht 7 vorgesehen. Die Größe des Abstands ist jeweils der entsprechenden Ausführung anzupassen und bleibt dem Fachmann überlassen.

Jedes federnde Bauteil 6 weist vorzugsweise eine Begrenzung 8 auf. Dies kann in Form eines ortsfest und quer angeordneten Drahtes 7 ausgebildet sein. Die Begrenzung 8 bestimmt die maximale Länge, die das Zwischenteil 4 in der Stütze 3 eintauchen kann.

Es ist davon auszugehen, dass der Querschnitt des Zwischenteils 4 derart ausgebildet ist, dass ein Eintauchen in die Stützen 3 möglich ist.

Das federnde Bauteil 6 ist an einem der zwei unteren Enden 9 des Zwischenteiles 4 angeordnet. Es ist ausreichend, wenn jedes Zwischenteil 4 mit einem federnden Bauteil 6 versehen ist, es besteht aber auch die Möglichkeit, beide unteren Enden 9 mit einem federnden Bauteil 6 zu versehen.

Das federnde Bauteil 6 und die Begrenzung 9 sind vorzugsweise an zwei gegenüberliegenden Seiten am unteren Ende 8 des Zwischenteils 4 angeordnet. Dies ist in den Figuren 1 und 2 dargestellt.

Die Zwischenteile 4 sind gegenüberliegend an den schmalen Seiten des Ständers 1, 2 wechselbar angeordnet. Es hat sich als vorteilhaft erwiesen, die federnden Bauteile 6 jeweils in den diagonal zueinander angeordneten Stützen 3 vorzusehen.

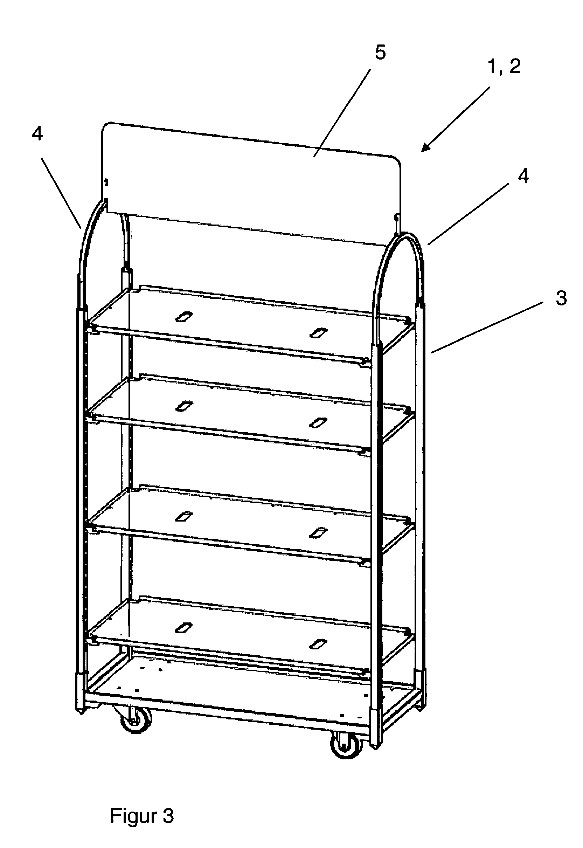

Figur 3 zeigt eine mögliche Ausführung eines Ständers 1 bzw. eines Verkaufsständers 2. Der Ständer weist vier Stützen 3 auf. An den Stützen 3 ist eine Vielzahl von Etagen vorgesehen. Zum Bewegen des Ständers 1 sind Rollen am Ständer 1 angeordnet. Der Ständer 1 weist zwei Zwischenteile 4 auf. Das Zwischenteil 4 ist jeweils an den gegenüber angeordneten Stützen 3 der schmalen Seite des Ständers 1 vorgesehen.

An beiden Zwischenteil 4 ist, vorzugsweise wechselbar, eine Informationseinrichtung 5 angeordnet. Die Informationseinrichtung 5 ist jeweils mittig am Zwischenteil 4 vorgesehen.

### Bezugszeichenliste

- 1: Ständer
- 2: Verkaufsständer
- 3: Stützen
- 4: Zwischenteil
- 5: Informationseinrichtung
- 6: federndes Bauteil
- 6.1: erste Ende (federndes Bauteil)
- 6.2: zweites Ende (federndes Bauteil)
- 7: Draht, Drähte
- 8: Begrenzung
- 9: unteres Ende (Zwischenteil)

## Patentansprüche

1. Ständer (1), insbesondere Verkaufsständer (2), mit Stützen (3) und mindestens einem wechselbaren Zwischenteil (4) an dem vorzugsweise eine Informationseinrichtung (5) angeordnet ist, **dadurch gekennzeichnet, dass** wenigstens eines der Zwischenteile (4) mit einem federnden Bauteil (6) ausgestattet ist.

2. Ständer nach Anspruch 1, **dadurch gekennzeichnet, dass** jedes Zwischenteil (4) mit seinem wenigstens einen federnden Bauteil (6) wechselbar im Inneren der Stütze (3) angeordnet ist.

3. Ständer nach den Ansprüchen 1 und 2, **dadurch gekennzeichnet, dass** das federnde Bauteil (6) vorzugsweise zweiteilig ausgeführt ist.

4. Ständer nach den Ansprüchen 1 bis 3, **dadurch gekennzeichnet, dass** das federnde Bauteil (6) mit seinem ersten Ende (6.1) ortsfest am Zwischenteil (4) angeordnet ist.

5. Ständer nach den Ansprüchen 1 bis 4, **dadurch gekennzeichnet, dass** das federnde Bauteil (6) mit seinem zweiten Ende (6.2) im Inneren des Zwischenteils (4) angeordnet ist.

6. Ständer nach den Ansprüchen 1 bis 5, **dadurch gekennzeichnet, dass** das federnde Bauteil (6) am unteren Ende (9) eines oder mehrerer Zwischenteile (4) angeordnet ist.

7. Ständer nach den Ansprüchen 1 bis 6, **dadurch gekennzeichnet, dass** das federnde Bauteil (6) aus zwei nebeneinander angeordneten Drähten (7) gebildet ist.

8. Ständer nach den Ansprüchen 1 bis 7, **dadurch gekennzeichnet, dass** das federnde Bauteil (6) eine Begrenzung (8) aufweist.
